# EUROPEAN PATENT APPLICATION

(11) **EP 1 354 683 A2**
(43) Date of publication of application: **22.10.2003**
(21) Application number: 03007996.6
(22) Date of filing: 10.04.2003
(51) Int. Cl.: B29C 44/38, B29C 44/60

(54) **Apparatus for continuously manufacturing panels made of expanded plastic material**

(30) Priority: 15.04.2002 IT MI20020799
(71) Applicant: IMPIANTI OMS S.p.A., I-20050 Verano Brianza (Prov. of Milano) (IT)
(72) Inventor: Massarotto, Loris, 20050 Triuggio (IT); Lombardini, Enrico, 20136 Milan (IT)
(74) Representative: Modiano, Guido, Dr.-Ing.

(57) **Abstract**

An apparatus for continuously manufacturing panels made of expanded plastic material, comprising a lower frame (2) and an upper frame (3), which respectively support a lower conveyor (10) and an upper conveyor (11) connectable one another so as to form and delimit a region for containing/retaining and advancing the expanded plastic panel (30) being manufactured, and sensors (40) for sensing the pressure applied by the expanding plastic material (33) within the region for containing/retaining the expanded plastic material panel (30).

## Description

The present invention relates to an apparatus for continuously manufacturing panels made of expanded plastic material.

It is known that apparatuses for continuously manufacturing panels made of expanded plastic material foam, particularly low-density rigid polyurethane, for thermal insulation, are currently commercially available.

In order to obtain expanded polyurethane foams, a so-called reactive liquid mixture of reagents, for example isocyanate and polyol, water, catalysts et cetera and of any expansion agents such as hydrocarbons, hydrochlorofluorocarbons, hydrofluorocarbons, and so forth, is poured.

Within a few seconds, the reactive mixture starts to react, generating heat and carbon dioxide due to the reaction between isocyanate and water.

The carbon dioxide, together with the gases generated by the evaporation of any expansion agents, due to the heat generated by the chemical reactions, expands the reactive mixture in order to form the foam.

Apparatuses have already been devised to perform this kind of process which allow the continuous production of panels made of low-density rigid foam for thermal insulation which have a rectangular or variously shaped transverse cross-section and have various lengths and thicknesses.

The foam of the lower and upper surfaces of such panels is coupled to outer layers of various kinds, such as paper, bituminized paper, wood, metallic plates made of steel, aluminum, copper and so forth, which constitute the outer claddings of the panel.

These panels are widely used particularly as insulation elements in the field of industrial building or in the refrigeration industry.

Apparatuses for continuously manufacturing such panels generally consist, in a simplified and schematic way, of an independent series of dosage lines, which dose the components of the reactive mixture in the intended ratios to a mixing head, which is fixed or movable and introduces the resulting mixture, optionally by means of suitable distribution units, between the two layers that contain the panel.

The reactive mixture undergoes a growth and polymerization step and is conveyed, together with the lower and upper containment layers, by means of adapted conveyance and containment systems that are supported by respective frames.

The conveyance and containment system, which is typically provided by conveyor belts constituted by slats with lateral containment means, is designed to limit the expansion region and to contain the panel during the foaming step, so that at the output of the system the panel is sufficiently polymerized and therefore is not subjected to internal pressures that might deform or otherwise damage it.

On the other hand, it is advisable that the length of the conveyor not be excessive with respect to the length strictly necessary to contain the expansion in order to avoid unnecessary equipment and running costs.

To obtain perfectly flat panels, with a preset uniform thickness and with specific physical and mechanical properties, the double conveyor belt must contain the expansion of the foam, which applies a pressure that is not uniform along the length of the conveyor belt but is generally variable along said length.

The variability of the value of the pressure applied by the foam depends on the characteristic times of the chemical reactions that characterize its expansion and polymerization and on the length and speed of advancement of the double conveyor belt, which determines the time for which the containment applied to the foam by said belt acts.

At the end of the expansion step, the panel is then cut by means of cutters of the conventional type, so as to obtain panels of the selected length.

Currently, management of the apparatus is entrusted in practice to the skill of the operator who controls manufacturing parameters, such as for example the flow-rate of the introduced reactive mixture, the speed of the conveyor belt, and so forth, therefore not allowing in practice to automate, if required, all the steps of operation, providing uniform treatment.

The aim of the invention is to solve the problem noted above by providing an apparatus for continuously manufacturing expanded plastic panels that allows to provide continuous control over the step of expansion of the reactive mixture for consequent control of the final dimensions and of the mechanical and physical characteristics of the panel being obtained.

Within this aim, an object of the invention is to provide an apparatus that allows continuous monitoring of the operating parameters that can affect the characteristics times of the reaction, of the flow-rate of the reactive mixture or in any case a variation of the speed of the double conveyor belt that produces the continuous advancement of the panels being manufactured.

Another object of the present invention is to provide an apparatus that allows to optimize the use of the advancement belt, thus allowing to improve the quality of the resulting product and to contain manufacturing costs.

Another object of the present invention is to provide an apparatus that by virtue of its particular constructive characteristics is capable of giving the greatest assurances of reliability and safety in use.

This aim and these and other objects that will become better apparent hereinafter are achieved by an apparatus for continuously manufacturing panels made of expanded plastic material, comprising a lower frame and an upper frame, which respectively support a lower conveyor and an upper conveyor that can be mutually coupled so as to form and delimit the region for containing and retaining the expanded plastic panel being manufactured, characterized in that it comprises means for sensing the pressure applied by said expanding plastic material within said region.

Further characteristics and advantages of the present invention will become better apparent from the description of a preferred but not exclusive embodiment of an apparatus for continuously manufacturing panels made of expanded plastic material, illustrated only by way of non-limitative example in the accompanying drawings, wherein:

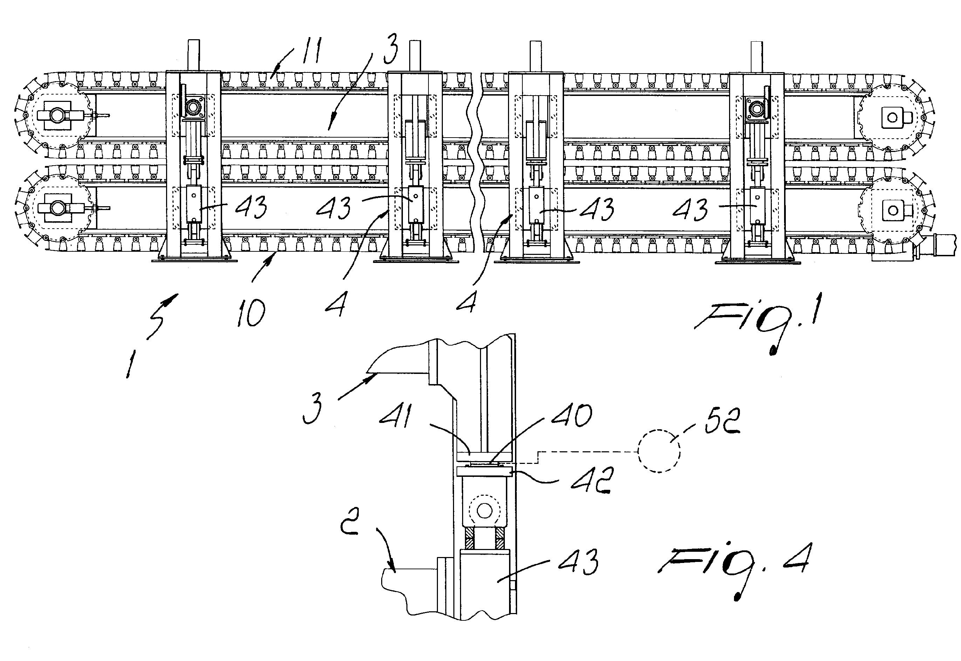

Figure 1 is a schematic side elevation view of the apparatus according to the invention;

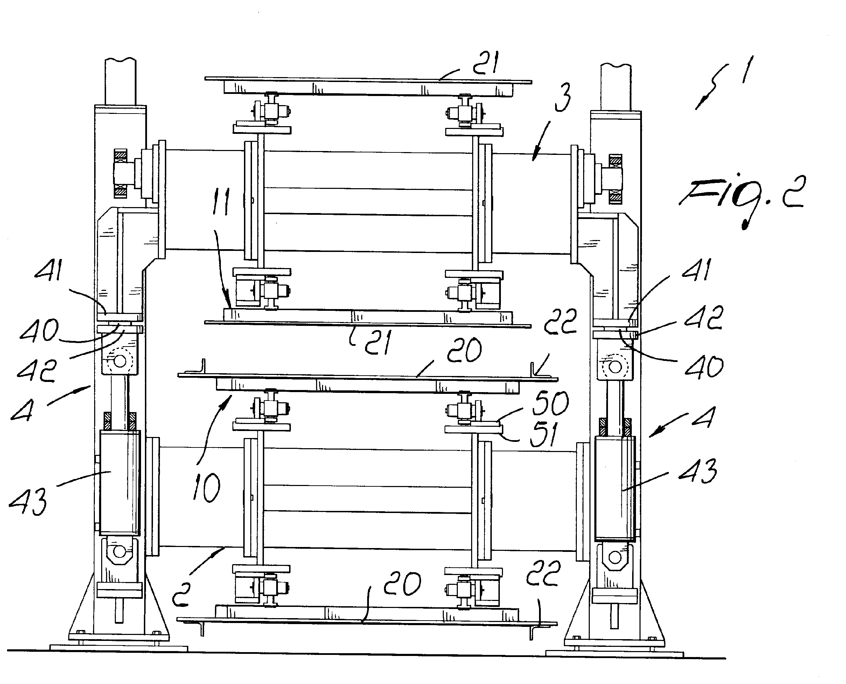

Figure 2 is a transverse sectional view of the apparatus, with the upper conveyor in the raised position;

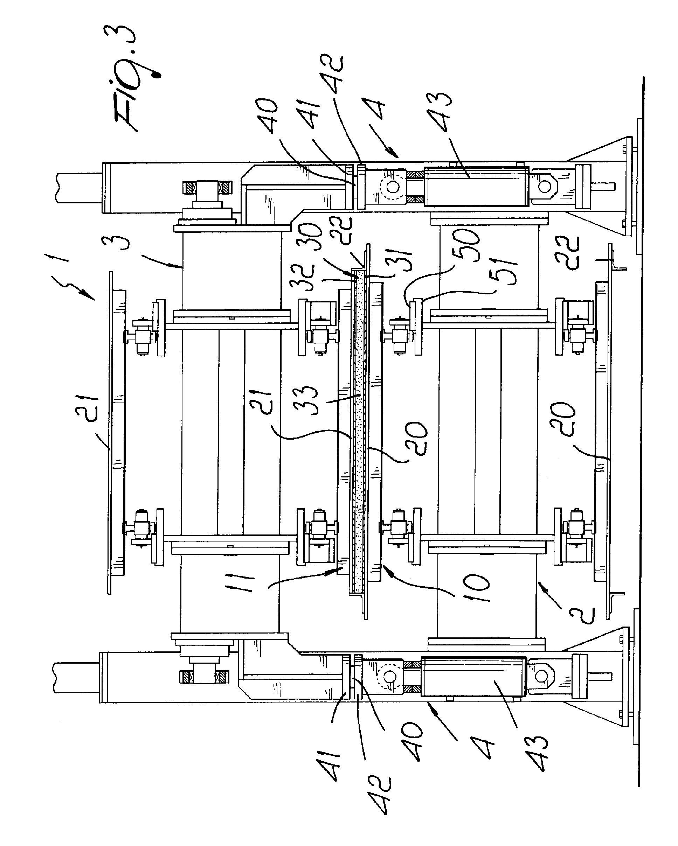

Figure 3 is a transverse sectional view of the apparatus during the step for containing the panel;
Figure 4 is a schematic view of a possible region where the pressure sensing means can be located.

With reference to the figures, the apparatus for continuously manufacturing panels made of expanded plastic material, according to the invention, generally designated by the reference numeral 1, comprises a lower frame 2 and an upper frame 3, which are connected one another by way of lateral uprights, generally designated by the reference numeral 4.

The lower frame 2 and the upper frame 3 respectively support a lower conveyor 10 and an upper conveyor 11, which advance continuously and which, in a preferred embodiment, are formed respectively by belts constituted by lower slats 20 and upper slats 21, which can be mated together so as to define a region for containing/retaining and advancing the panel 30 being formed, which is generally constituted by a lower outer layer 31 and by an upper outer layer 32, between which mixture is introduced that forms the expanded foam 33, said foam being constituted for example by polyurethane.

Lateral containment elements 22 are arranged on the lower slats 20 and help to form an enclosed region where the reactive mixture introduced between the layers 31 and 32 expands.

An important feature of the invention is constituted by the fact that sensing means are provided for sensing the pressure applied by the expanding plastic material inside the containment region delimited by the lower conveyor and by the upper conveyor.

The pressure sensing means can be of various kinds, can be provided for example by means of load cells 40, and are interposed on the uprights 4 between the upper connecting plate 41 and the lower connecting plate 42, which is connected to a corresponding hydraulic piston 43, which is designed to oppose to the resultant of the pressure of the expanding plastic material against the upper frame, preventing its rise if it exceeds the weight of the upper frame, thus obtaining a preset thickness for the panel being manufactured.

The interposition of load cells capable of measuring compression or traction loads or stresses between the connecting plates 41 and 42 allows to measure the behavior of the force produced by the weight of the upper frame 3 and by the pressure applied to said frame by the foam at each supporting upright.

Since the distribution of the forces produced by the weight of the structure on the supporting legs is known, the distribution of the pressure applied by the polyurethane is also known by subtraction, albeit in a relatively discontinuous manner.

Furthermore, optionally, it is also possible to use other arrangements of the load cells, which can be arranged for example between the guide 50 on which the slats 20 slide and the supporting beam 51 connected to the lower frame.

Depending on the arrangement and number of load cells or other sensing means used, it is possible to measure, by using conventional data processing methods, the behavior of the pressure of the polyurethane in a more or less detailed fashion, according to the requirements.

It should be added to the above that the pressure sensing means can be provided by means of strain gauges, optical motion measurement systems, means for sensing the pressure in the hydraulic cylinders that oppose to the pressure, and other means that allow to determine directly or indirectly the force that acts in the panel containment region.

Variation of the pressure measurements can be used for manual or automated adjustment of the signals and controls of the process, of one or more of the main manufacturing parameters such as, for example, the flow-rate of the reactive mixture and the speed of the double conveyor belt, so as to always achieve a correct development of the process. Thus, the pressure sensing means may be operatively connected to process control means 52, which are adapted for manufacture parameter setting, such as flow rate control means, for controlling the flow rate of the reactive mixtures, or speed adjusting means for controlling the speed of the conveyor 20,21.

From the above description it clearly appears that the invention achieves the proposed aim and objects, and in particular the fact is stressed that the control and identification of the optimum values of the distribution of the forces produced by the pressure of the polyurethane allows to achieve a better utilization of the length of the double conveyor belt and optimized characteristics for the panel.

Furthermore, the persistence of the values during a given production run can be taken as an indicator of the correct development of the process, whereas the occurrence of a variation from said values indicates a variation in the development of the process with respect to the ideal manufacturing conditions, thus allowing to act immediately.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2002A000799 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for continuously manufacturing panels made of expanded plastic material, comprising a lower frame (2) and an upper frame (3), which respectively support a lower conveyor (10) and an upper conveyor (11) connectable one another so as to form and delimit a region for containing/retaining and advancing the expanded plastic panel (30) being manufactured, **characterized in that** it comprises means (40) for sensing the pressure applied by said expanding plastic material (33) within said region.

2. The apparatus according to claim 1, **characterized in that** said pressure sensing means (40) are interposed on the uprights (4) that connect said lower frame (2) and said upper frame (3).

3. The apparatus according to one or more of the preceding claims, **characterized in that** said pressure sensing means (40) are arranged between an upper connecting plate (41) and a lower connecting plate (42), said lower connecting plate (42) being associated with a hydraulic piston (43) for contrasting the pressure of the expanding plastic material (33).

4. The apparatus according to one or more of the preceding claims, **characterized in that** said pressure sensing means (40) are located between the guide (50) for the sliding of the slats (20) that constitute said lower conveyor (10) and the supporting beam (51) that is connected to said lower frame (2).

5. The apparatus according to one or more of the preceding claims, **characterized in that** said pressure sensing means comprise load cells (40).

6. The apparatus according to one or more of the preceding claims, **characterized in that** said pressure sensing means comprise load cells (40) that are arranged so as to sense traction and compression stresses.

7. The apparatus according to one or more of claims 1-4, **characterized in that** said pressure sensing means (40) comprise optical motion measurement systems.

8. The apparatus according to one or more of claims 1-4, **characterized in that** said pressure sensing means (40) comprise means for sensing the pressure in said pressure-contrasting hydraulic piston.

9. The apparatus according to one or more of the preceding claims, **characterized in that** said pressure sensing means (40) are operatively connected to process control means (52) for setting manufacturing parameters.

10. The apparatus according to one or more of the preceding claims, **characterized in that** said pressure sensing means (40) are operatively connected to means (52) for adjusting the flow-rate of the reactive mixture.

11. The apparatus according to one or more of the preceding claims, **characterized in that** said pressure sensing means (40) are operatively connected to means (52) for adjusting the speed of said conveyor belts (20, 21).
